(19) Europäisches Patentamt
European Patent Office
Office européen des brevets

(11) **EP 3 073 312 A1**

(12) **EUROPEAN PATENT APPLICATION**

(43) Date of publication:
**28.09.2016 Bulletin 2016/39**

(51) Int Cl.:
***G02B 27/00*** (2006.01)     ***G02B 27/42*** (2006.01)

(21) Application number: **16466006.0**

(22) Date of filing: **23.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.03.2015 CZ 20150207**

(71) Applicants:
• **Univerzita Palackého v Olomouci**
  **779 00 Olomouc (CZ)**

• **Vysoké U Ení Technické V Brn**
  **60190 Brno (CZ)**

(72) Inventors:
• **Zdenek, Bouchal**
  **750 02 Prerov 6 (CZ)**
• **Vladimír, Chlup**
  **779 00 Olomouc (CZ)**
• **Petr, Bouchal**
  **750 02 Prerov 6 (CZ)**

(74) Representative: **Skoda, Milan**
  **Nahoranska 308**
  **549 01 Nove Mesto nad Metuji (CZ)**

(54) **REFRACTIVE AFOCAL OPTICAL SYSTEM FOR CORRECTION OF CHROMATIC ABERRATION OF DIFFRACTIVE IMAGING ELEMENTS**

(57)     A refractive afocal optical system for correction of the chromatic aberration of diffractive imaging elements, more particularly the refractive afocal optical system (1) with angular magnification $\Gamma_{med}$ for medium wavelength $\lambda_{med}$, for correction of the chromatic aberration of the diffractive imaging element (2), particularly for correction of the dispersion effects of the diffractive imaging element (2) of focal length $f'_{diff,med}$ and in combination with the diffractive optical element (2) for realization of an achromatic or apochromatic imaging system in the spectral band from the shortest wavelength $\lambda_{short}$ to the longest wavelength $\lambda_{long}$, which includes m optical members (10, 20), wherein each of the optical members (10, 20) consists of a pair of refractive optical elements of focal lengths $f'_{I,med}$, $f'_{II,med}$, made from refractive optical materials, whose generalized Abbe numbers $v_I$ and $v_{II}$ are bound by the equation

$$\frac{1}{v_I} - \frac{1}{v_{II}} = -\frac{\lambda_{short} - \lambda_{long}}{\lambda_{med}} \frac{f'_{I,med}}{mf'_{diff,med}},$$ wherein

the relative dispersion of all refractive optical materials used ranges from 0.49 to 0.51, and the focal length of the other member of the pair $f'_{II,med}$ is selected that the optical member is afocal for the medium wavelength $\lambda_{med}$.

**List of Reference Marks**

1
optical system
2
diffractive imaging element
10
member I
11
lens I
12
lens II
20
member II
21
lens III
22
lens IV
101
surface I
102
surface II
103
surface III
104
surface IV
201
surface V
202
surface VI
203
surface VII
204
surface VIII

EP 3 073 312 A1

Printed by Jouve, 75001 PARIS (FR)

## Description

## Technical Field

The invention relates to the refractive hyperchromatic afocal optical system, more particularly to the refractive hyperchromatic afocal optical system for correction of chromatic aberration of diffractive imaging elements.

## State of the Art

Hybrid optical systems of very good correction are used as standard optical imaging systems, whose total optical power is mainly attained by the refractive optical elements, and a diffractive optical element of low optical power is used as a correction element to compensate chromatic aberration of the refractive elements. The use of separate imaging diffractive elements of higher optical power causes problems due to extremely strong diffractive dispersion. In modern optics, the programmable diffractive lenses created by the electro-optical control of liquid crystals on a display of device called spatial light modulator (SLM) are increasingly used. The diffractive elements created by the SLM were applied to shaping of the light beams in optical trapping and free-space communications, production of computer-generated holograms, and transformation of optical pulses. The possibility to implement the diffractive elements by amplitude and phase modulation of light has significantly influenced development of optical microscopy, where the SLM has been used both in illuminating and imaging parts. The diffractive splitting and shaping of light by the SLM is essential for the incoherent correlation holography utilized in digital microscopy for recording and computer-assisted reconstruction of incoherently illuminated and fluorescent samples.

The imaging diffractive elements exhibit extremely high dispersion, and their separate operation is possible only in the applications using a very narrow spectrum of light. Polychromatic imaging by the diffractive lens created on an active display of the SLM was demonstrated by successive insertion of the spectral filters synchronized with changes to parameters of the diffractive lens. Application of the diffractive imaging elements to broadband light requires elimination of unfavourable effects of the strong diffractive dispersion. One of the options for the diffractive dispersion correction is the use of refractive optics with extremely high chromatic aberration. The chromatic afocal systems were previously used and are still applied to image softening, particularly for portrait lenses. Dispersion compensation of the diffractive lenses is extremely important for applications, and its use is promising for achieving of high resolution in broadband correlation microscopy. Apochromatic correction of the SLM diffractive lenses according to this invention has never been made in any of the used spectral bands.

To examine the chromatic aberration of the optical systems, the dispersion characteristics were introduced to be used both for refractive and diffractive imaging elements. Refractive index of an optical material for wavelength $\lambda$ can be derived from Sellmeier equation $n^2(\lambda) = 1.0 + \sum_{1}^{k} \dfrac{b_i}{\lambda^2 - c_i}$, where $b_i, c_i$ are material characteristics as specified by manufacturer. Generalized Abbe number $\nu_{med} = \dfrac{n_{med} - 1}{n_{short} - n_{long}}$ and the partial relative dispersion $P_{short,med} = \dfrac{n_{short} - n_{med}}{n_{short} - n_{long}}$ represent the basic coefficients used for achromatic, apochromatic or hyperchromatic design of the optical systems, where $n_{med}$, $n_{short}$, $n_{long}$ are the refractive indices for medium, shortest, and longest wavelength of the used spectral band. In the visible spectrum, the wavelengths corresponding to Fraunhofer spectral lines $d,F,C$ are usually used, and the refractive indices denoted as $n_d, n_F, n_C$. The relative partial dispersion $P_{short,med}$ can be determined by $\nu_{short}, \nu_{med}$, $P_{short,med} = \nu_{short} - \nu_{med}$. Achromatization of the optical system with the total optical power $K$, consisting of closely spaced thin lenses with optical powers $K_i$, requires fulfillment of the conditions

$$\sum_i \frac{K_i}{\nu_i} = 0, \qquad (1)$$

$$\sum_i K_i = K. \qquad (2)$$

The apochromatization in the third-order space requires elimination of the secondary spectrum

$$\sum_i \frac{K_i}{\nu_i} P_{i(short,med)} = K \qquad (3)$$

and minimization of spherical aberration and coma.

The kinoform-type diffractive elements may be used to achieve a high efficiency imaging. The diffractive elements may be favourably created by the SLM in many applications, their use is however limited by high diffractive dispersion demonstrated by standard dispersion parameters. The generalized Abbe number and the relative partial dispersion of the diffractive surface are given by the equations $\nu_{diff,short,med} = \dfrac{\lambda_{med}}{\lambda_{short} - \lambda_{long}}$ and

$P_{diff,short,med} = \dfrac{\lambda_{short} - \lambda_{med}}{\lambda_{short} - \lambda_{long}}$. These coefficients remain constant in spectral bands with the same relative width $(\lambda_{short} - \lambda_{long})/\lambda_{med} = const$. For example, for VIS (0.450μm to 0.650μm) and SWIR (1.05μm to 1.55μm) spectral bands, we get $\nu_{diff,0.45,0.65} = \nu_{diff,1.05,1.55} = -2.7$ and $P_{diff,0.45,0.65} = P_{diff,1.05,1.55} = 0.5$. Stability of the dispersion properties of the diffractive surfaces in various spectral bands is exceptional compared to the material dispersion of the refractive surfaces. It significantly influences design strategy in the aberration correction. Common optical glasses have different range of the characteristic coefficients in different spectral bands.

The compensation of the material dispersion of the refractive optical elements by dispersion of the diffractive elements is utilized in the hybrid achromatic doublets. The achromatization of the doublets is achieved provided the ratio of the optical powers of the first refractive element $K_1$ and the other diffractive element $K_2$ meets $K_1/K_2 = \nu_{med}/2.75$. For available optical glasses in VIS and SWIR bands, the ratio of the optical powers is from 5.5 to 22.9, and 2.8 to 49, respectively. Achromatization can be performed only when the optical power of the refractive element is substantially higher than the optical power of the diffractive element. Compared to the VIS spectrum, realization of a hybrid achromatic doublet is easier in the SWIR spectral band. The problem, which remains unresolved, is dispersion compensation of the diffractive optical elements used as separate imaging elements with required optical power.

The object of the invention is optical system that overcomes disadvantages of current art of the imaging technology working with diffractive imaging elements, more particularly diffractive elements created by the SLM. Significant diffractive dispersion prevents the use of diffractive elements in systems operating with incoherent radiation sources, e.g. bulbs, discharge lamps and LEDs, whose spectral properties cause unacceptable image degradation. When spectral filters are used for dispersion elimination, the spectral bandwith should be a few nanometres. The spectral filtration reduces energy efficiency of the system and causes a significant deterioration of the signal-to-noise ratio resulting in degradation of the image quality.

## Principle of the Invention

The above mentioned drawbacks are to a substantial extent removed and the object of the invention is fulfilled by the refractive hyperchromatic afocal optical system for correction of the chromatic aberration of diffractive imaging elements, particularly the refractive hyperchromatic afocal optical system with angular magnification $\Gamma_{med}$ for wavelength $\Gamma_{med}$, for correction of the chromatic aberration of the diffractive imaging element, particularly for correction of the dispersion effects of the diffractive imaging element of the focal length $f'_{diff,m}$, and in combination with this diffractive optical element for implementation of the achromatic or apochromatic imaging system in the spectral band from the shortest wavelength $\lambda_{short}$ to the longest wavelength $\lambda_{long}$, according to the invention, which comprises of $m$ optical members, wherein each of the members consists of a pair of refractive optical elements of the focal lengths $f'_{I,med}$, $f'_{II,med}$ made from refractive optical materials, of which generalized Abbe numbers $\nu_I$ and $\nu_{II}$ are according to formula

$\dfrac{1}{\nu_I} - \dfrac{1}{\nu_{II}} = -\dfrac{\lambda_{short} - \lambda_{long}}{\lambda_{med}} \dfrac{f'_{I,med}}{mf'_{diff,med}}$ , wherein the relative dispersion of all refractive optical materials used ranges from 0.49 to 0.51, and the focal length of the other pair member $f'_{II,med}$ is such that for its medium wavelength $\lambda_{med}$ holds true that $f'_{II,med} \approx f'_{I,med}$.

The substance of the invention lies in the design of a correction refractive optical system, which is afocal for the medium wavelength $\lambda_{med}$ of the spectrum band used, whereas for the peripheral wavelengths $\lambda_{short}$ and $\lambda_{lons}$, the

system shows non-zero optical power in such extent to compensate the chromatic aberration of the diffractive imaging element, whose focal length changes within the range of values given. The favourability of the invention lies in that the optical power of the diffractive imaging element, more specifically the diffractive element created by the SLM, remains unaltered by the correction refractive system for medium wavelength $\lambda_{med}$, while the resulting system consisting of the correction refractive system and the diffractive imaging element becomes achromatic or apochromatic.

The preferred design is provided when for the medium wavelength $\lambda_{med}$ the resulting optical power of the correction refractive optical system is $K_{med} = 0$ and the angular magnification complies with $0.5 < \Gamma_{med} < 2.0$. Furthermore preferred is when each of the refractive optical elements consists of at least one and at most eight lenses. When the conditions are met, the correction of the chromatic and monochromatic aberrations across the system is provided.

The correction refractive hyperchromatic afocal system effectively compensates for the chromatic aberration of the diffractive imaging element provided that its focal length complies with $250mm< f'_{diff,med}<600mm$ while using radiation with medium wavelength $1.1\mu m<\lambda_{med} <1.45\mu m$.

Most preferred is that the refractive afocal optical system permits design of an optical lens system for the spectral band $0.9\mu$m to $1.7\mu$m (SWIR) being afocal for the medium wavelength, whereas being hyperchromatic for the other wavelengths, so it corrects the sphero-chromatic aberration of the diffractive element located behind it, and shows achromatic or apochromatic correction in combination.

The design of the correction afocal refractive optical system is made with respect to the required dispersion compensation of the diffractive optical element, and permits various technical modifications that differ in the number of the optical elements used and the imaging performance achieved. The condition of the chromatic aberration correction of the diffractive element (e.g. created using the SLM) of given optical power $K_{diff}$, achieved using an adjacent two-member refractive thin system without impact on the refractivity of the diffractive element for medium wavelength of the spectrum, can be expressed by the following equations

$$K_I + K_{II} = 0, \qquad (6)$$

$$\frac{K_I}{v_I} + \frac{K_{II}}{v_{II}} + \frac{K_{diff}}{v_{diff}} = 0, \qquad (7)$$

$$\frac{K_I}{v_I} P_{I(short,med)} + \frac{K_{II}}{v_{II}} P_{II(short,med)} + \frac{K_{diff}}{v_{diff}} P_{diff(short,med)} = 0. \qquad (8)$$

Equation (6) provides afocality of the correction system, while equations (7) and (8) represent conditions for achromatization and apochromatization of the system consisting of the correction system and the diffractive imaging element, respectively. Equation (7) requires hyperchromatization of the correction two-member refractive system that can be expressed for the spectral bands in question as follows

$$\frac{1}{v_I} - \frac{1}{v_{II}} = \frac{1}{2.75\kappa}, \qquad (9)$$

where $\kappa = K_I / K_{diff}$ is the factor restricting applicable relative system aperture. To achieve higher relative apertures, distribution of the refractivity $K_I$ into two or more lenses of the same or similar material is proposed, so that $K_I = \sum_{m=1}^{M} K_m.$

Similar procedure can be applied also in the splitting of the other member with the refractivity $K_{II}$, $K_{II} = \sum_{m=1}^{M} K'_m.$ The trivial apochromacity condition of the achromatized system consisting of $M$ lenses can be written as $|P_{1(short,med)}| = |P_{2(short,med)}| =... = |P_{M(short,med)}|$. In fact, exact fulfillment of the condition is almost impossible. However, the selection of suitable materials enables to find the minimal differences in the relative dispersions and the maximal differences of generalized Abbe numbers and suitable refraction indices. By computer processing, a preliminary selection of convenient groups of optical glasses was made. The optical glasses were then used in different optical design variants of the systems optimized in a wide spectrum range. For the SWIR range, the glasses Schott KZFSN4, N-KZFS2, N-KZFS4, N-KzFS11, N-PK52A, N-FK51A, N-LAK8, NLAK14, or adequate glasses from other manufacturers were used.

The relations and conditions are applicable to the system of thin lenses. In the system of real thick lenses with specific surface radii of curvature, thicknesses and spacings between lenses, the conditions will be broken to a certain extent, and additional optimization of the system is then needed together with correction of the optical aberrations. In combination with a specific diffractive imaging element, the optical system of the afocal refractive corrector is optimized for the apochromatic correction, minimization of sphero-chromatic aberration in the middle zone of the axial rays and maximization of the contrast across the spectrum band. Emphasis is put on the afocality of the refractive correction system for the medium wavelength of the spectrum during optimization. For the sake of production costs, the optimization may be performed under the condition of shape uniformity of individual elements in the cascade arrangement of the system with multiple optical members.

## Overview of the Figures

The invention will be now described in detail using the drawings on which

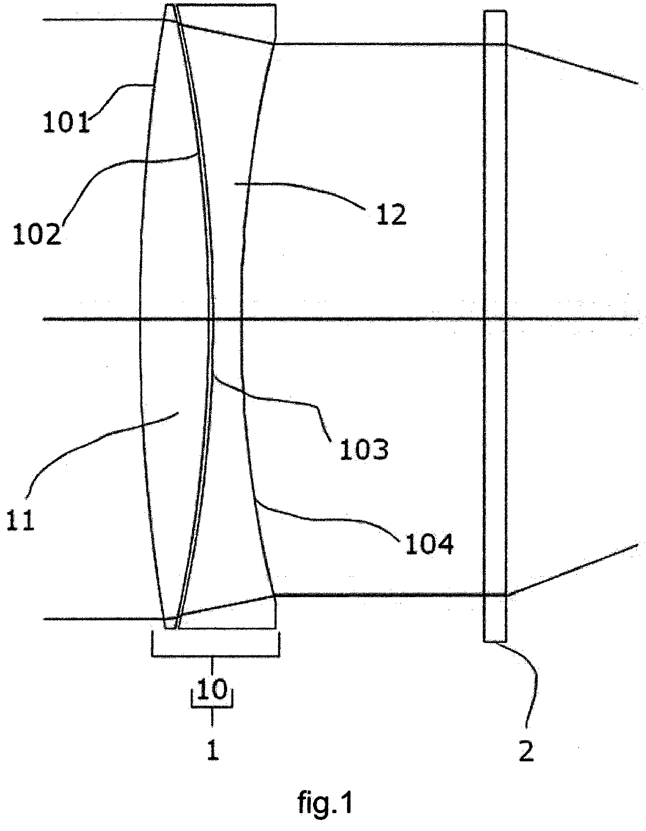

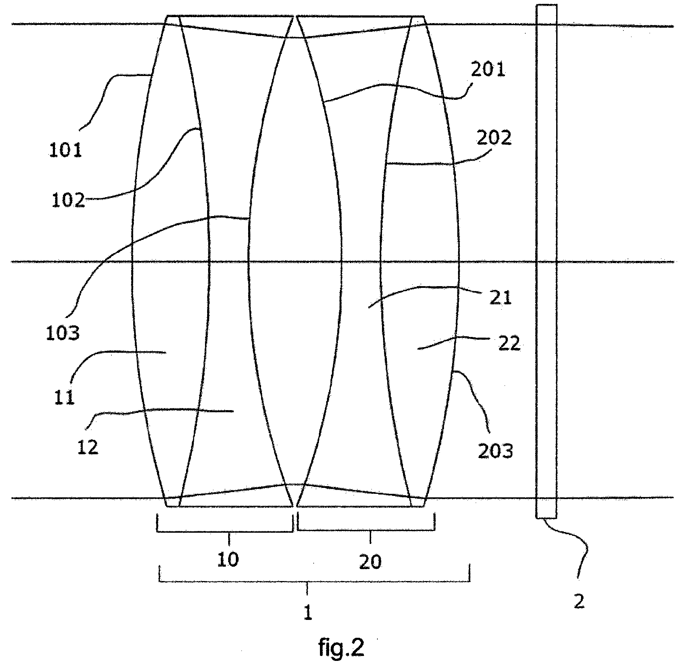

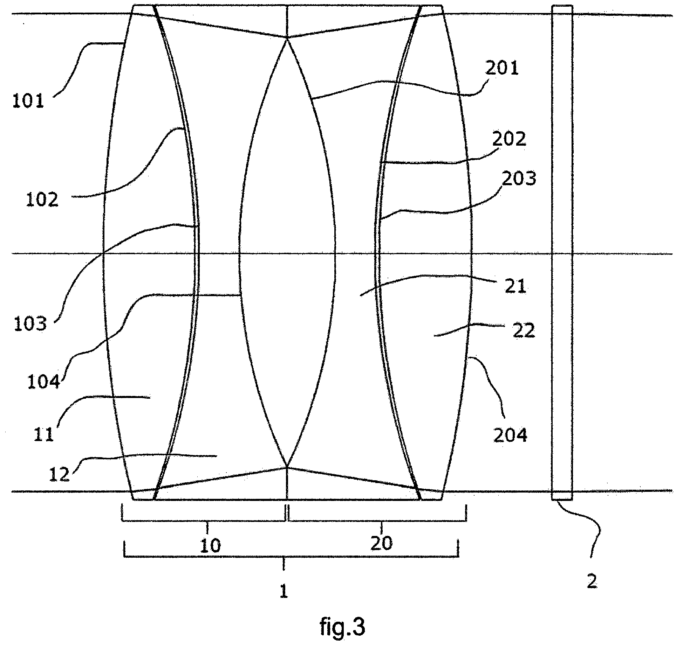

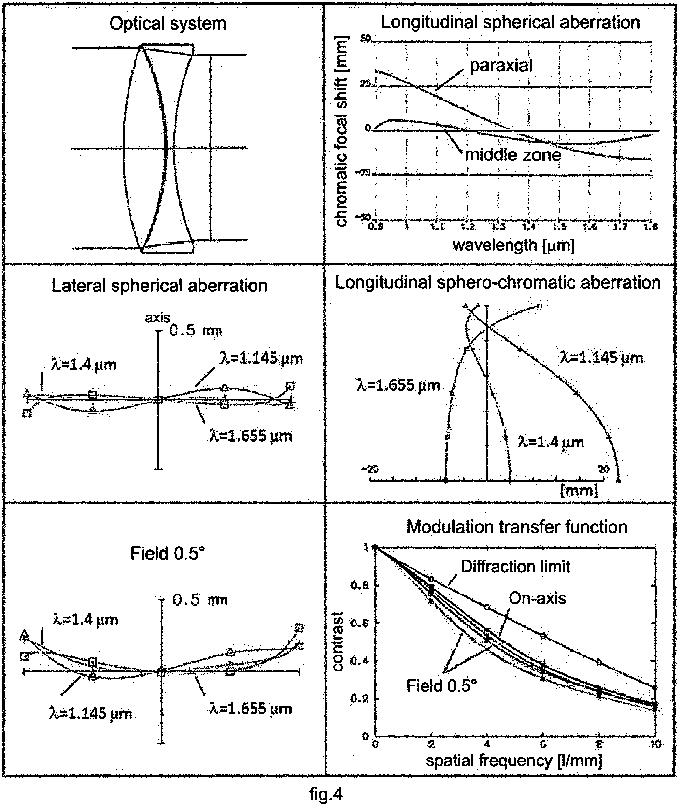

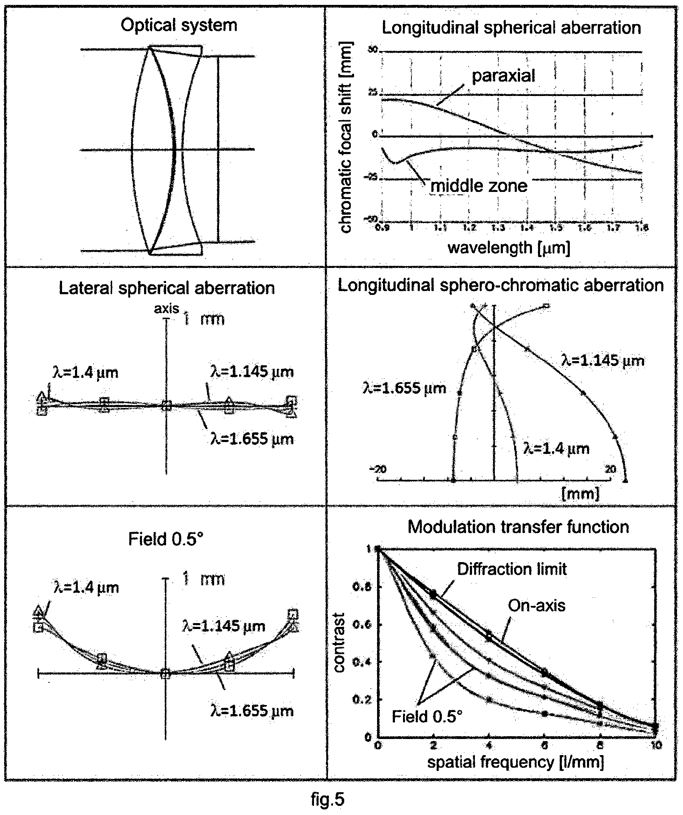

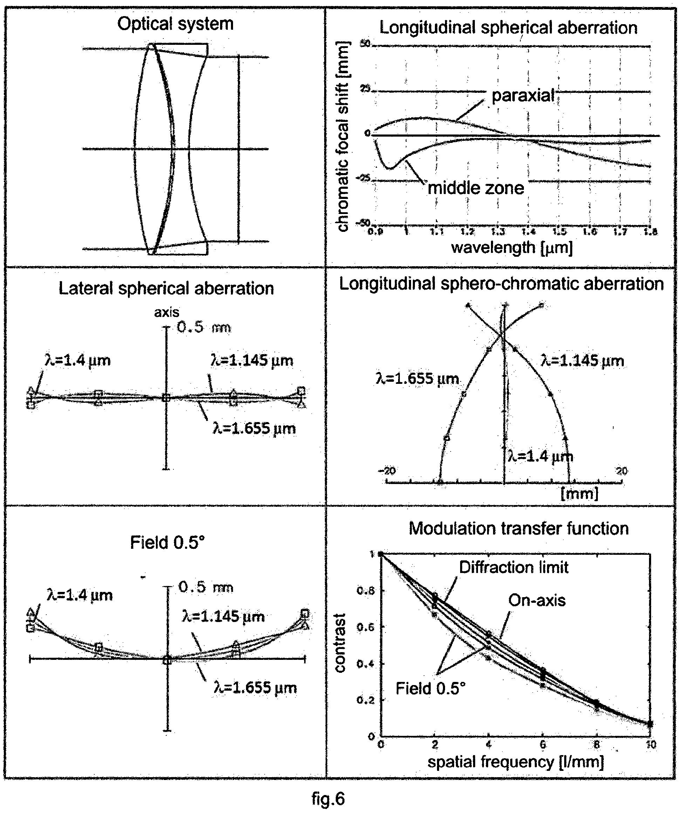

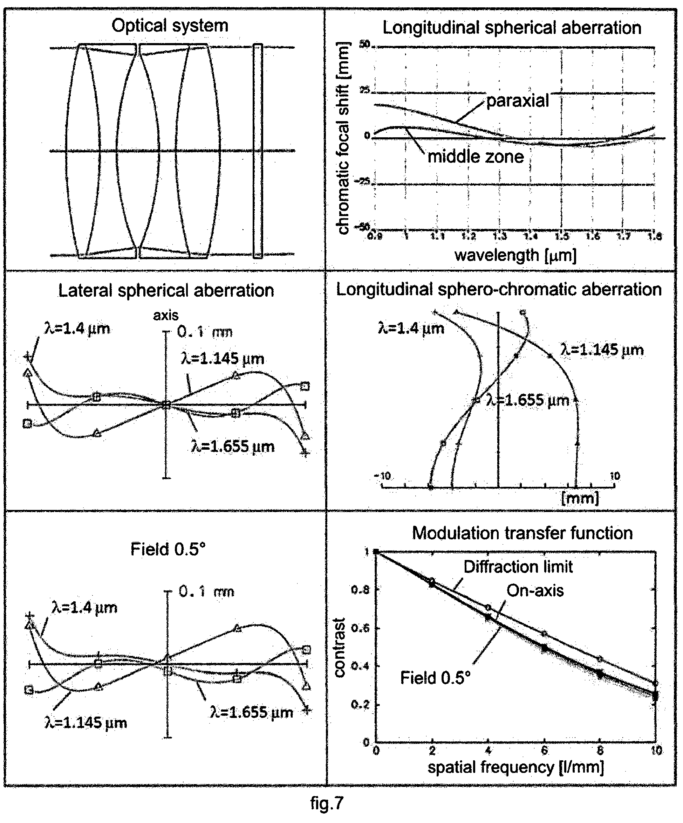

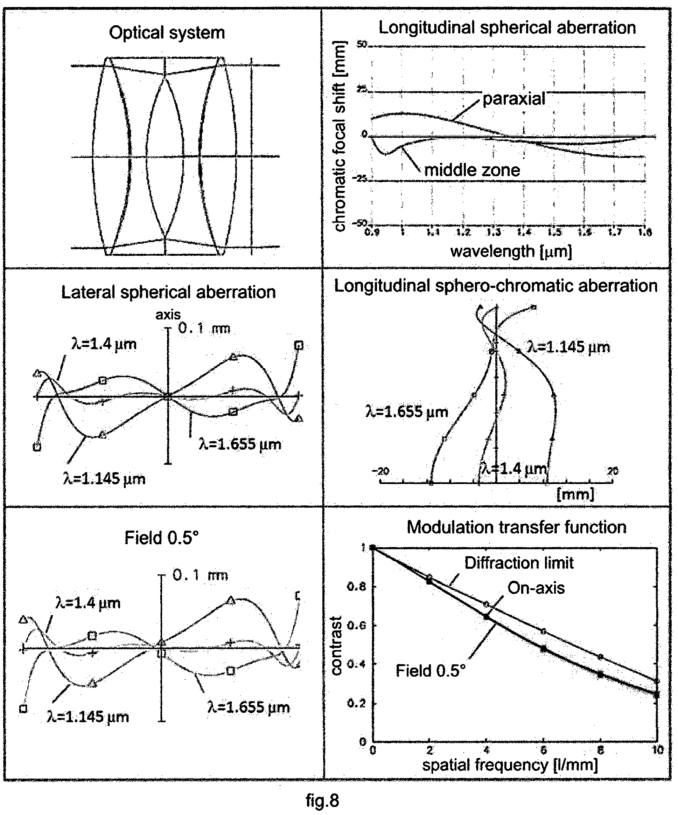

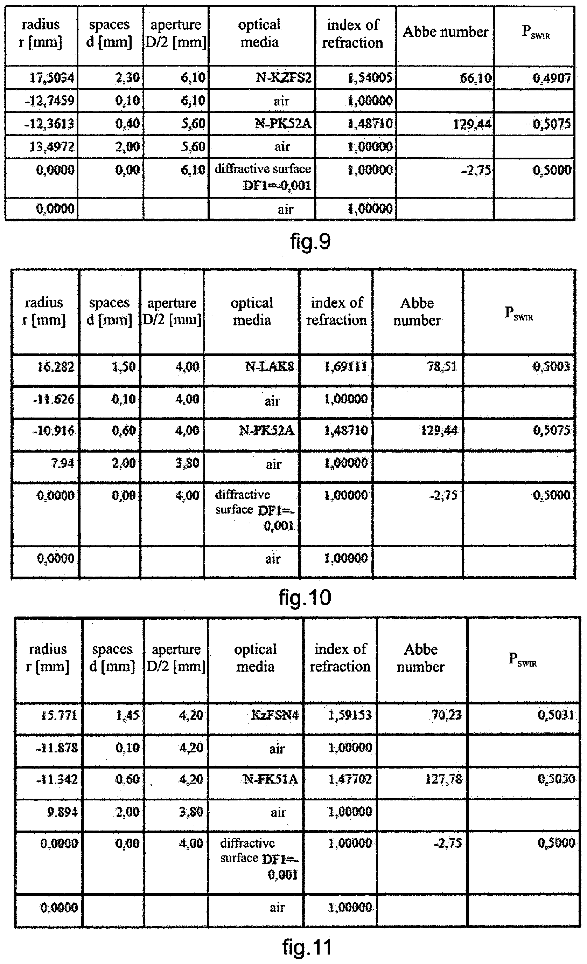

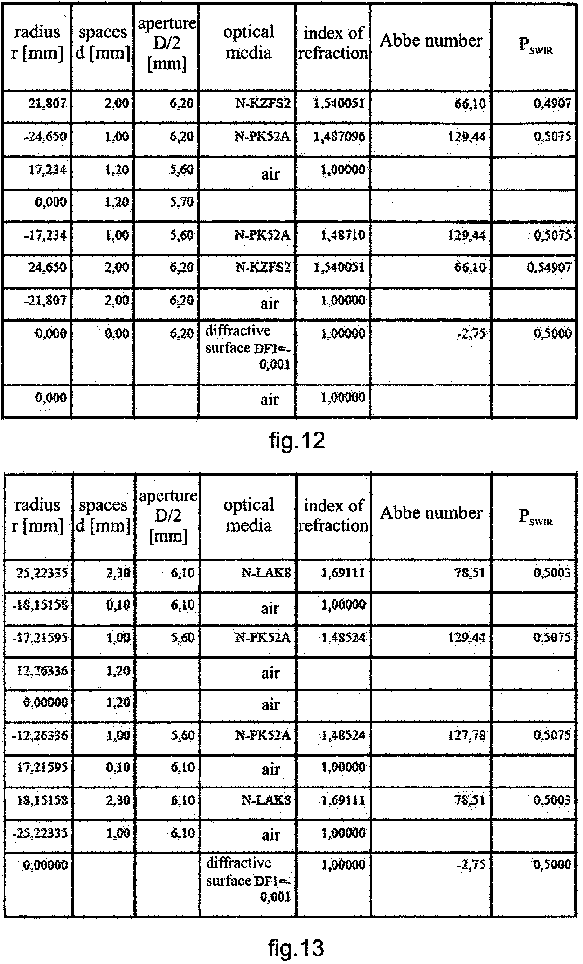

Fig. 1 illustrates schematically the refractive hyperchromatic afocal single-member two-lens optical system according to examples 1, 2, 3, Fig. 2 illustrates schematically the refractive hyperchromatic afocal two-member four-lens optical system according to example 4, Fig. 3 illustrates schematically the refractive afocal two-member four-lens hyperchromatic optical system according to example 5, Fig. 4 illustrates optical scheme, curves of ray aberrations and modulation transfer functions of the refractive afocal optical system according to example 1, Fig. 5 illustrates optical scheme, curves of ray aberrations, and modulation transfer functions of the refractive afocal optical system according to example 2, Fig. 6 illustrates optical scheme, curves of ray aberrations, and modulation transfer functions of the refractive afocal optical system according to example 3, Fig. 7 illustrates optical scheme, curves of ray aberrations, and modulation transfer functions of the refractive afocal optical system according to example 4, Fig. 8 illustrates optical scheme, curves of ray aberrations, and modulation transfer functions of the refractive afocal optical system according to example 5, Fig. 9 illustrates table of design parameters of the refractive afocal optical system according to example 1, Fig. 10 illustrates table of design parameters of the refractive afocal optical system according to example 2, Fig. 11 illustrates table of design parameters of the refractive afocal optical system according to example 3, Fig. 12 illustrates table of design parameters of the refractive afocal optical system according to example 4, and Fig. 13 illustrates table of design parameters of the refractive afocal optical system according to example 5.

## Examples of the Performance of the Invention

Example 1

The refractive hyperchromatic afocal one-member two-lens optical system $\underline{1}$ (Fig. 1) with angular magnification $\Gamma_{med}$ = 1.07 for medium wavelength $\lambda_{med}$ = 1.4 $\mu$m, which corrects the dispersion effects of the diffractive imaging element $\underline{2}$ of focal length $f'_{diff,med}$ = 500$mm$ and creates in combination with it the apochromatic imaging system in the spectral band from the shortest wavelength $\lambda_{short}$ = 1.145 $\mu m$ to the longest wavelength $\lambda_{long}$ = 1.655 $\mu$m. The refractive afocal optical system $\underline{1}$ consists of one optical member $\underline{10}$ (m=1) consisting of two refractive optical elements being a pair of lenses $\underline{11},\underline{12}$ from the optical materials with Abbe numbers $v_I$ = 66.1 and $v_{II}$ = 129.4, of focal lengths $f'_{I,med}$=14.0$mm$ and

$f'_{II,med}$=-13.2$mm$, hence the condition of achromatization $\dfrac{1}{v_I} - \dfrac{1}{v_{II}} = -\dfrac{\lambda_{short} - \lambda_{long}}{\lambda_{med}} \dfrac{f'_{I,med}}{mf'_{diff,med}}$ being complied with sufficient accuracy, as well as the apochromatization condition requiring approximate equality of the relative dispersions of the optical materials, $P_{1(short, med)}$ = 0.491 and $P_{2(short,med)}$ = 0.508.

The focal length $f'_{II,med}$ of the lens $\underline{12}$ is selected so that the system remains afocal even after introduction of the real shape parameters of the lenses defined by the radii of curvature of the surfaces $\underline{101}$, $\underline{102}$, $\underline{103}$, $\underline{104}$, thicknesses and spacings, and after correction of residual aberrations.

The refractive afocal optical system $\underline{1}$ has the design parameters according to the table in Fig. 9. The optical scheme of the refractive afocal optical system $\underline{1}$, the curves of ray aberrations, and the modulation transfer functions are shown in Fig. 4.

Example 2

The refractive hyperchromatic afocal one-member two-lens optical system $\underline{1}$ (Fig. 1) with angular magnification $\Gamma_{med}$ = 1.07 for medium wavelength $\lambda_{med}$ = 1.4 $\mu m$, which corrects the dispersion effects of the diffractive imaging element $\underline{2}$ of focal length $f'_{diff,med}$ = 500$mm$ and creates in combination with it the apochromatic imaging system in the spectral band from the shortest wavelength $\lambda_{short}$ =1.145$\mu m$ to the longest wavelength $\lambda_{long}$ = 1.655$\mu m$. The refractive afocal optical system 1 consists of one optical member $\underline{10}$ (m=1) consisting of two refractive optical elements being a pair of lenses $\underline{11,12}$ from the optical materials with Abbe numbers $v_I$ =78.51 and $v_{II}$ =129.4, of focal lengths $f'_{I,med}$ = 10.0$mm$ and $f'_{II,med}$ = -9.3$mm$, hence the condition of achromatization $\dfrac{1}{v_I} - \dfrac{1}{v_{II}} = -\dfrac{\lambda_{short} - \lambda_{long}}{\lambda_{med}} \dfrac{f'_{I,med}}{mf'_{diff,med}}$ being complied with sufficient accuracy, as well as the apochromatization condition requiring approximate equality of the relative dispersions of the optical materials, $P_{1(short,med)}$ = 0.503 and $P_{2(short,med)}$ = 0.508. The focal length $f'_{II,med}$ of the lens $\underline{12}$ is selected so that the system remains afocal even after introduction of the real shape parameters of the lenses defined by the radii of curvature of the surfaces $\underline{101}$, $\underline{102}$, $\underline{103}$, $\underline{104}$, thicknesses and spacings, and after correction of residual aberrations.

The refractive afocal optical system $\underline{1}$ has the design parameters according to the table in Fig. 10. The optical scheme of the refractive afocal optical system $\underline{1}$, the curves of ray aberrations, and the modulation transfer functions are shown in Fig. 5.

Example 3

The refractive hyperchromatic afocal one-member two-lens optical system $\underline{1}$ (Fig. 1) with angular magnification $\Gamma_{med}$ = 1.06 for medium wavelength $\lambda_{med}$ = 1.4$\mu m$, which corrects the dispersion effects of the diffractive imaging element $\underline{2}$ of focal length $f'_{diff,med}$ = 500$mm$ and creates in combination with it the apochromatic imaging system in the spectral band from the shortest wavelength $\lambda_{short}$ = 1.145$\mu m$ to the longest wavelength $\lambda_{long}$ = 1.655 $\mu m$. The refractive afocal optical system $\underline{1}$ consists of one optical member $\underline{10}$ (m=1) consisting of two refractive optical elements being a pair of lenses $\underline{11}$, $\underline{12}$ from the optical materials with Abbe numbers $v1$ = 70.23 and $v_{II}$ =127.78 of focal lengths $f'_{I,med}$ = 11.4$mm$ and $f'_{II,med}$=-11.3$mm$, hence the condition of achromatization $\dfrac{1}{v_I} - \dfrac{1}{v_{II}} = -\dfrac{\lambda_{short} - \lambda_{long}}{\lambda_{med}} \dfrac{f'_{I,med}}{mf'_{diff,med}}$ being complied with sufficient accuracy, as well as the apochromatization condition requiring approximate equality of the relative dispersions of the optical materials, $P_{1(short,med)}$ = 0.503 and $P_{2(short,med)}$ = 0.505. The focal length $f'_{II,med}$ of the lens $\underline{12}$ is selected so that the system is afocal even after introduction of the real shape parameters of the lenses defined by the radii of curvature of the surfaces $\underline{101}$, $\underline{102}$, $\underline{103}$, $\underline{104}$, thicknesses and spacings, and after correction of residual aberrations.

The refractive afocal optical system $\underline{1}$ has the design parameters according to the table in Fig. 11. The optical scheme of the refractive afocal optical system $\underline{1}$, the curves of ray aberrations, and the modulation transfer functions are shown in Fig. 6.

Example 4

The refractive hyperchromatic afocal two-member four-lens optical system $\underline{1}$ (Fig. 2) with angular magnification $\Gamma_{med}$ = 0.98 for medium wavelength $\lambda_{med}$ = 1.4$\mu m$, which corrects the dispersion effects of the diffractive imaging element $\underline{2}$ of focal length $f'_{diff,med}$ = 500$mm$ and creates in combination with it the apochromatic imaging system in the spectral band from the shortest wavelength $\lambda_{short}$ = 1.145$\mu m$ to the longest wavelength $\lambda_{long}$ = 1.655$\mu m$.

The refractive afocal two-member ($m$=2) optical system $\underline{1}$ consists of two members $\underline{10}$, $\underline{20}$, each consisting of two refractive optical elements, of which first member $\underline{10}$ consists of a pair of cemented lenses $\underline{11}$, $\underline{12}$, with surfaces $\underline{101}$, $\underline{103}$ and cemented surface $\underline{102}$, made from optical materials with Abbe numbers $v_I$ = 66.1 and $v_{II}$ =129.4, of focal lengths $f'_{I,med}$ = 21.8$mm$ and $f'_{II,med}$=-20.7$mm$, hence the condition of achromatization $\dfrac{1}{v_I} - \dfrac{1}{v_{II}} = -\dfrac{\lambda_{short} - \lambda_{long}}{\lambda_{med}} \dfrac{f'_{I,med}}{mf'_{diff,med}}$ being complied with sufficient accuracy as well as the apochromatization condition requiring approximate equality of the relative dispersions of the optical materials $P_{1(short,med)}$ = 0.491 and $P_{2(short,med)}$ = 0.507, and the other member $\underline{20}$ is identical to the first member $\underline{10}$ but with opposite orientation, whereas it consist of a pair of lenses 21, 22, with surfaces 201, 203, and cemented surface 202.

The refractive afocal optical system 1 has the design parameters according to the table in Fig. 12. The optical scheme of the refractive afocal optical system 1, the curves of ray aberrations, and the modulation transfer functions are shown in Fig. 7.

Example 5

The refractive hyperchromatic afocal two-member four-lens optical system 1 (Fig. 3) with angular magnification $\Gamma_{med}$ = 1.0 for medium wavelength $\lambda_{med}$ = 1.4$\mu m$, which corrects the dispersion effects of the diffractive imaging element 2 with focal length $f'_{diff,med}$=500$mm$ and creates in combination with it the apochromatic imaging system in the spectral band from the shortest wavelength $\lambda_{short}$ = 1.145$\mu m$ to the longest wavelength $\lambda_{long}$ = 1.655$\mu m$.

The refractive afocal two-member ($m$=2) optical system 1 consists of two members 10, 20, each consisting of two refractive optical elements, of which first member 10 consists of two noncemented lenses 11,12, with surfaces 101, 102, 103, 104, made from optical materials with Abbe numbers $v_I$ = 78.51 a $v_{II}$ = 129.4, of focal lengths $f'_{I,med}$=15.6$mm$

and $f'_{II,med}$=-14.5$mm$, hence the condition of achromatization $\dfrac{1}{v_I} - \dfrac{1}{v_{II}} = -\dfrac{\lambda_{short} - \lambda_{long}}{\lambda_{med}} \dfrac{f'_{I,med}}{mf'_{diff,med}}$ being com-

plied with sufficient accuracy, as well as the apochromatization condition requiring approximate equality of the relative dispersions of the optical materials $P_{1(short,med)}$ = 0.500 and $P_{2(short,med)}$ = 0.507, and the other member 20 is identical to the first member 10 but with opposite orientation, whereas it consist of a pair of lenses 21,22, with surfaces 201, 202, 203, 204.

The refractive afocal optical system 1 has the design parameters according to the table in Fig. 13. The optical scheme of the refractive afocal optical system 1, the curves of ray aberrations and the modulation transfer functions are shown in Fig. 8.

## Industrial Application

The refractive afocal optical system for correction of the diffractive dispersion according to the invention can be utilized for realization of a hybrid achromatic or apochromatic system preserving the imaging quality while using broadband light with the spectral width from tens to hundreds of nanometres to achieve the high image resolution in broadband correlation microscopy and imaging systems that use the diffractive imaging elements, more particularly the diffractive imaging elements favourably created by the SLM.

## Claims

1. A refractive afocal optical system for correction of the chromatic aberration of diffractive imaging elements, more particularly the refractive afocal optical system (1) with angular magnification $\Gamma_{med}$ for medium wavelength $\lambda_{med}$, for correction of the chromatic aberration of the diffractive imaging element (2), particularly for correction of the dispersion effects of the diffractive imaging element (2) of focal length $f'_{diff,med}$ and in combination with the diffractive optical element (2) for realization of an achromatic or apochromatic imaging system in the spectral band from the shortest wavelength $\lambda_{short}$ to the longest wavelength $\lambda_{long}$, **characterized by** that it includes m optical members (10, 20), wherein each of the optical members (10, 20) consists of a pair of refractive optical elements of focal lengths $f'_{I,med}$, $f'_{II,med}$ made from refractive optical materials, whose generalized Abbe numbers $v_I$ and $v_{II}$ are bound by the equation

   $$\frac{1}{v_I} - \frac{1}{v_{II}} = -\frac{\lambda_{short} - \lambda_{long}}{\lambda_{med}} \frac{f'_{I,med}}{mf'_{diff,med}} \text{ , wherein the relative dispersion of all refractive optical materials used}$$

   ranges from 0.49 to 0.51, and the focal length of the other member of the pair $f'_{II,med}$ is selected that the optical member is afocal for the medium wavelength $\lambda_{med}$.

2. The refractive afocal optical system according to claim 1 **characterized by** that for the medium wavelength $\lambda_{med}$ the resulting optical power of the system is $K_{med}$ = 0 and the angular magnification complies with the condition 0.5 < $\Gamma_{med}$ <2.0.

3. The refractive afocal optical system according to claims 1 and 2, **characterized by** that each of the refractive optical members consists of at least one lens and eight lenses at the most.

4. The refractive afocal optical system according to claims 1 to 3 **characterized by** that the corrected diffractive imaging element (2) has focal length complying with the condition of $250mm < f'_{diff,med} < 600mm$, when radiation of medium wavelength $1.1\mu m < \lambda_{med} < 1.45\mu m$ is applied.

fig.1

fig.2

fig.3

fig.4

fig.5

fig.6

fig.7

fig.8

| radius r [mm] | spaces d [mm] | aperture D/2 [mm] | optical media | index of refraction | Abbe number | P$_{SWIR}$ |
|---|---|---|---|---|---|---|
| 17,5034 | 2,30 | 6,10 | N-KZFS2 | 1,54005 | 66,10 | 0,4907 |
| -12,7459 | 0,10 | 6,10 | air | 1,00000 | | |
| -12,3613 | 0,40 | 5,60 | N-PK52A | 1,48710 | 129,44 | 0,5075 |
| 13,4972 | 2,00 | 5,60 | air | 1,00000 | | |
| 0,0000 | 0,00 | 6,10 | diffractive surface DF1=-0,001 | 1,00000 | -2,75 | 0,5000 |
| 0,0000 | | | air | 1,00000 | | |

fig.9

| radius r [mm] | spaces d [mm] | aperture D/2 [mm] | optical media | index of refraction | Abbe number | P$_{SWIR}$ |
|---|---|---|---|---|---|---|
| 16.282 | 1,50 | 4,00 | N-LAK8 | 1,69111 | 78,51 | 0,5003 |
| -11.626 | 0,10 | 4,00 | air | 1,00000 | | |
| -10.916 | 0,60 | 4,00 | N-PK52A | 1,48710 | 129,44 | 0,5075 |
| 7.94 | 2,00 | 3,80 | air | 1,00000 | | |
| 0,0000 | 0,00 | 4,00 | diffractive surface DF1=-0,001 | 1,00000 | -2,75 | 0,5000 |
| 0,0000 | | | air | 1,00000 | | |

fig.10

| radius r [mm] | spaces d [mm] | aperture D/2 [mm] | optical media | index of refraction | Abbe number | P$_{SWIR}$ |
|---|---|---|---|---|---|---|
| 15.771 | 1,45 | 4,20 | K2FSN4 | 1,59153 | 70,23 | 0,5031 |
| -11.878 | 0,10 | 4,20 | air | 1,00000 | | |
| -11.342 | 0,60 | 4,20 | N-FK51A | 1,47702 | 127,78 | 0,5050 |
| 9.894 | 2,00 | 3,80 | air | 1,00000 | | |
| 0,0000 | 0,00 | 4,00 | diffractive surface DF1=-0,001 | 1,00000 | -2,75 | 0,5000 |
| 0,0000 | | | air | 1,00000 | | |

fig.11

| radius r [mm] | spaces d [mm] | aperture D/2 [mm] | optical media | index of refraction | Abbe number | P_SWIR |
|---|---|---|---|---|---|---|
| 21,807 | 2,00 | 6,20 | N-KZFS2 | 1,540051 | 66,10 | 0,4907 |
| -24,650 | 1,00 | 6,20 | N-PK52A | 1,487096 | 129,44 | 0,5075 |
| 17,234 | 1,20 | 5,60 | air | 1,00000 | | |
| 0,000 | 1,20 | 5,70 | | | | |
| -17,234 | 1,00 | 5,60 | N-PK52A | 1,48710 | 129,44 | 0,5075 |
| 24,650 | 2,00 | 6,20 | N-KZFS2 | 1,540051 | 66,10 | 0,54907 |
| -21,807 | 2,00 | 6,20 | air | 1,00000 | | |
| 0,000 | 0,00 | 6,20 | diffractive surface DF1=-0,001 | 1,00000 | -2,75 | 0,5000 |
| 0,000 | | | air | 1,00000 | | |

fig.12

| radius r [mm] | spaces d [mm] | aperture D/2 [mm] | optical media | index of refraction | Abbe number | P_SWIR |
|---|---|---|---|---|---|---|
| 25,22335 | 2,30 | 6,10 | N-LAK8 | 1,69111 | 78,51 | 0,5003 |
| -18,15158 | 0,10 | 6,10 | air | 1,00000 | | |
| -17,21595 | 1,00 | 5,60 | N-PK52A | 1,48524 | 129,44 | 0,5075 |
| 12,26336 | 1,20 | | air | | | |
| 0,00000 | 1,20 | | air | | | |
| -12,26336 | 1,00 | 5,60 | N-PK52A | 1,48524 | 127,78 | 0,5075 |
| 17,21595 | 0,10 | 6,10 | air | 1,00000 | | |
| 18,15158 | 2,30 | 6,10 | N-LAK8 | 1,69111 | 78,51 | 0,5003 |
| -25,22335 | 1,00 | 6,10 | air | 1,00000 | | |
| 0,00000 | | | diffractive surface DF1=-0,001 | 1,00000 | -2,75 | 0,5000 |

fig.13

Europäisches
Patentamt

European
Patent Office

Office européen
des brevets

# EUROPEAN SEARCH REPORT

Application Number

EP 16 46 6006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 95/34013 A1 (IND RES LTD [NZ]; BEACH ALLAN D [NZ]) 14 December 1995 (1995-12-14) * figure 4 * * page 7, line 1 - line 2 * | 1-4 | INV. G02B27/00 G02B27/42 |
| A | US 4 204 748 A (YONEKUBO KEN [JP]) 27 May 1980 (1980-05-27) * figure 5 * | 1-4 | |
| A | EP 2 113 803 A1 (NIKON VISION CO LTD [JP]) 4 November 2009 (2009-11-04) * figure 1 * | 1-4 | |
| A | EP 0 441 206 A1 (HUGHES AIRCRAFT CO [US]) 14 August 1991 (1991-08-14) * figure 2 * | 1-4 | |

TECHNICAL FIELDS
SEARCHED      (IPC)

G02B

The present search report has been drawn up for all claims

| Place of search | Date of completion of the search | Examiner |
|---|---|---|
| The Hague | 26 July 2016 | Quertemont, Eric |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 46 6006

This annex lists the patent family members relating to the patent documents cited in  the above-mentioned European search report.
The members are as contained in the European Patent Office EDP file on
The European Patent Office is in no way liable for these particulars which are merely given for the purpose of information.

26-07-2016

| Patent document cited in search report | | Publication date | Patent family member(s) | | Publication date |
|---|---|---|---|---|---|
| WO 9534013 | A1 | 14-12-1995 | AU | 686393 B2 | 05-02-1998 |
|  |  |  | AU | 2684795 A | 04-01-1996 |
|  |  |  | CA | 2192328 A1 | 14-12-1995 |
|  |  |  | EP | 0770224 A1 | 02-05-1997 |
|  |  |  | JP | H10505432 A | 26-05-1998 |
|  |  |  | WO | 9534013 A1 | 14-12-1995 |
| US 4204748 | A | 27-05-1980 | NONE | | |
| EP 2113803 | A1 | 04-11-2009 | EP | 2113803 A1 | 04-11-2009 |
|  |  |  | JP | 4860500 B2 | 25-01-2012 |
|  |  |  | JP | 2008197378 A | 28-08-2008 |
|  |  |  | US | 2009303600 A1 | 10-12-2009 |
|  |  |  | US | 2011149397 A1 | 23-06-2011 |
|  |  |  | WO | 2008099945 A1 | 21-08-2008 |
| EP 0441206 | A1 | 14-08-1991 | DE | 69117997 D1 | 25-04-1996 |
|  |  |  | DE | 69117997 T2 | 01-08-1996 |
|  |  |  | EP | 0441206 A1 | 14-08-1991 |
|  |  |  | ES | 2084717 T3 | 16-05-1996 |
|  |  |  | IL | 96953 A | 04-04-1993 |
|  |  |  | JP | H04213421 A | 04-08-1992 |
|  |  |  | TR | 25841 A | 01-09-1993 |
|  |  |  | US | 5044706 A | 03-09-1991 |

EPO FORM P0459

For more details about this annex : see Official Journal of the European Patent Office, No. 12/82